# EUROPÄISCHE PATENTSCHRIFT

(11) **EP 3 482 662 B1**
(45) Veröffentlichungstag und Bekanntmachung des Hinweises auf die Patenterteilung: **14.06.2023**
(21) Anmeldenummer: 18200080.2
(22) Anmeldetag: 12.10.2018
(51) Int. Cl.: A47J 36/32, A47J 43/07

(54) **VERFAHREN ZUM BETREIBEN EINER KÜCHENMASCHINE, KÜCHENMASCHINE SOWIE AMBIENTESYSTEM**
METHOD FOR OPERATING A KITCHEN APPLIANCE, KITCHEN APPLIANCE, AND AMBIENCE SYSTEM
PROCÉDÉ DE FONCTIONNEMENT D'UNE MACHINE DE CUISINE, MACHINE DE CUISINE AINSI QUE SYSTÈME D'AMBIANCE

(30) Priorität: 08.11.2017 DE 102017126107
(43) Veröffentlichungstag der Anmeldung: 15.05.2019
(73) Patentinhaber: Vorwerk & Co. Interholding GmbH, 42270 Wuppertal (DE)
(72) Erfinder: Hoffmann, Sabrina, 42653 Solingen (DE)
(74) Vertreter: Bals, Rüdiger

(56) Entgegenhaltungen:
- DE-A1-102014 113 623
- DE-A1-102015 103 596

## Beschreibung

Die Erfindung betrifft ein Verfahren zum Betreiben einer Küchenmaschine, eine Küchenmaschine zur Zubereitung von Lebensmitteln sowie ein Ambientesystem.

Aus dem Stand der Technik sind Küchenmaschinen bekannt, mit welchen Lebensmittel effektiv zubereitet werden können. So können solche Küchenmaschinen häufig einen Benutzer durch ein Rezept leiten und dem Benutzer dabei die unterschiedlichen Schritte zum Ausführen des Rezeptes nach und nach vorgeben. Weiterhin sind in derartigen Küchenmaschinen häufig diverse Funktionen integriert, um Speisen zu erhitzen, Zutaten zu verrühren oder auch dampfzugaren. Ein großer Vorteil einer solchen Küchenmaschine ist somit, dass in einem einzigen Gerät viele Funktionen integriert sind, die zum Zubereiten von Speisen benötigt werden.

Bisher beschränken sich derartige Funktionen jedoch im Wesentlichen auf den direkten Kochzusammenhang, um dem Benutzer den Kochvorgang zu erleichtern. Häufig ist das Kochen allerdings mit Emotionen verbunden und/oder erfährt in unterschiedlichen Situationen eine unterschiedliche Priorisierung durch den Benutzer. So wird der Benutzer in manchen Situationen einen emotionalen Kochabend erleben wollen, in anderen Situationen sich auf eine Veranstaltung einstimmen wollen und in weiteren Situationen möglichst effektiv zum Kochergebnis gelangen wollen. Bisher bekannte Küchenmaschinen können hier jedoch bislang nur wenig Einfluss auf die jeweilige Situation bzw. Umgebung des Benutzers beim Kochen nehmen.

Elektromotorisch betriebene Küchenmaschinen sind ferner aus der DE 10 2015 103 596 A1 sowie der DE 10 2014 113 623 A1 bekannt.

Es ist somit eine Aufgabe der vorliegenden Erfindung voranstehende, aus dem Stand der Technik bekannte Nachteile zumindest tlw. zu beheben. Insbesondere ist es eine Aufgabe der vorliegenden Erfindung das situative Empfinden eines Benutzers beim Zubereiten von Lebensmitteln zu verbessern und/oder ein Kocherlebnis mit einem passenden Ambiente zu verbessern.

Die Aufgabe wird gelöst durch ein Verfahren zum Betreiben einer Küchenmaschine mit den Merkmalen des unabhängigen Anspruchs 1, eine Küchenmaschine mit den Merkmalen des unabhängigen Anspruchs 9 sowie durch ein Ambientesystem mit den Merkmalen des unabhängigen Anspruchs 14.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben worden sind, selbstverständlich auch im Zusammenhang mit der erfindungsgemäßen Küchenmaschine und/oder dem erfindungsgemäßen Ambientesystem und jeweils umgekehrt, sodass bzgl. der Offenbarung zu den einzelnen Erfindungsaspekten stets wechselseitig Bezug genommen wird bzw. werden kann.

Erfindungsgemäß umfasst ein Verfahren zum Betreiben einer Küchenmaschine, die zum Zubereiten von Lebensmitteln geeignet ist, die folgenden Schritte:
- Festlegen eines Rezeptes zum Zubereiten der Lebensmittel,
- Bestimmen einer Themenkategorie, die dem Rezept zugeordnet ist,
- Bereitstellen eines Unterhaltungsmediums in Abhängigkeit der Themenkategorie.

Vorzugsweise handelt es sich bei der Küchenmaschine um eine Küchenmaschine, die zum semiautomatischen oder vollautomatischen Zubereiten der Lebensmittel geeignet ist. Dazu weist die Küchenmaschine eine Steuereinheit zum Abarbeiten des Rezeptes auf.

Ferner kann die Küchenmaschine ein Rührwerk, ein Mittel zum Erhitzen der Lebensmittel und/oder weitere Funktionen zur Durchführung des Kochvorgangs umfassen. Der Benutzer kann somit vorzugsweise zunächst das Rezept zum Zubereiten der Lebensmittel festlegen, wobei das Rezept zumindest einer Themenkategorie zugeordnet ist. Die Bestimmung der Themenkategorie kann indirekt aus dem Rezept erfolgen.

Es ist denkbar, dass aus unterschiedlichen Schlüsselbegriffen des Rezeptes und/oder weiteren Benutzereingaben die Themenkategorie bestimmt wird. Dies kann bspw. mittels eines Steuergerätes der Küchenmaschine durchgeführt werden und/oder mittels eines externen Servers, mit dem die Küchenmaschine verbunden sein kann. Insbesondere kann die Themenkategorie auch automatisch oder zumindest tlw. automatisch bestimmt werden, wobei bspw. die Themenkategorie nach Wochentag und/oder nach dem Kalender des Benutzers ausgewählt wird. Insbesondere kann eine Benutzerkonfiguration dazu zuvor hinterlegt werden.

Erfindungsgemäss sind somit die Themenkategorie und das Rezept bereits zuvor indirekt miteinander verknüpft.

Vorzugsweise umfasst die Themenkategorie weiterhin zumindest eine der folgenden Kategorisierungen:
- Regionsbezogen (z.B. Regional, Italienisch, Griechisch),
- Erlebnisorientiert (z.B. Krimi-Dinner, Erzählung, Musical),
- Emotionsorientiert (z.B. Musikstil, Spannungsbezogen),
- Benutzerspezifisch (z.B. Vorlieben, Interessen),
- Lehre (z.B. Tutorials, detaillierte Anleitung für die Ausführung von Rezeptschritte).

Unter einem Unterhaltungsmedium im Sinne der vorliegenden Erfindung kann dabei bspw. eine Klangkomposition verstanden werden, d. h. z. B. ein Musikstück oder eine Auswahl von Hintergrundgeräuschen (z. B. Meeresrauschen, eine passende Erzählung oder eine Abfolge von mündlichen Anweisungen). Ferner kann unter dem Unterhaltungsmedium insbesondere ein Video oder ein Videoausschnitt verstanden werden, welcher bspw. auf einer Anzeigevorrichtung der Küchenmaschine anzeigbar sein kann. Die Abhängigkeit des Unterhaltungsmediums kann anhand von vorhandenen Listen erfolgen, wobei bspw. unterschiedliche Unterhaltungsmedien (wie Musiktitel) einer Themenkategorie zugeordnet sein können. Insbesondere kann das bereitgestellte Unterhaltungsmedium zufällig aus mehreren Unterhaltungsmedien ausgewählt werden, die mit der Themenkategorie korrespondieren. Ferner ist es denkbar, dass das Unterhaltungsmedium automatisch aus der Themenkategorie ermittelt wird, vorzugsweise anhand einer Klangnotenfolge einer Klangkomposition. So ist es denkbar, dass die Themenkategorie z. B. "emotionsorientiert" ist und daraufhin langsame Musikstücke bereitgestellt werden. Vorzugsweise kann das Unterhaltungsmedium digital oder analog vorliegen, wobei das Unterhaltungsmedium bspw. auf einer CD, als Datei einer Speichereinheit der Küchenmaschine oder über einen Streamingzugriff zur Verfügung gestellt wird. Durch Lehrvideos kann beispielsweise die Geschwindigkeit des Kochvorgangs gesteigert sein und somit das situative Empfinden des Benutzers in Bezug auf den Kochvorgang verbessert sein, insbesondere wenn der Benutzer in Eile ist.

Somit kann durch das erfindungsgemäße Verfahren ein passendes Ambiente zum jeweiligen Rezept erzeugt werden. Dabei kann das Ambiente schon beim Zubereiten der Lebensmittel geschaffen werden, bspw. um Vorfreude auf das Essen zu erzeugen, und/oder das Ambiente kann während des anschließenden Essens durch das Unterhaltungsmedium aufgewertet werden.

Es ist ferner bei einem erfindungsgemäßen Verfahren vorgesehen, dass das Verfahren folgenden Schritt umfasst:
- Bestimmen einer Rezeptart des Rezeptes, über welche die Themenkategorie dem Rezept zugeordnet ist, insbesondere wobei Rezeptdaten durch die Küchenmaschine zur Verfügung gestellt werden.

So kann z. B. die Auswahl des Rezeptes über eine Anzeigevorrichtung der Küchenmaschine erfolgen und sich automatisch, insbesondere anhand von mit dem Rezept verknüpften Stichwörtern, die Rezeptart ergeben. Ferner ist es denkbar, dass die Auswahl des Rezeptes zufällig aus einer Rezeptsammlung in Abhängigkeit von der Rezeptart durchgeführt wird. Dazu kann bspw. zuvor lediglich die Rezeptart durch den Benutzer ausgewählt werden, woraufhin das Rezept in Abhängigkeit von der Rezeptart festgelegt wird. Eine Rezeptsammlung kann bspw. eine Auflistung mehrerer Rezepte innerhalb einer Datenbank aufweisen. Die Rezeptdaten können dabei vorteilhafterweise eine Zusammensetzung der Lebensmittel umfassen, eine Anleitung zum Ausführen von Kochschritten oder dergleichen. Dabei können vorzugsweise zumindest einige Rezeptdaten durch die Küchenmaschine selbst zur Verfügung gestellt werden. Ferner ist die Rezeptart indirekt mit der Themenkategorie verknüpft, wobei aus der Rezeptart die Themenkategorie bestimmt wird. So ist es denkbar, dass die Rezeptart das Schlüsselwort "Italienisch" umfasst, während die Themenkategorie abstrahiert das Schlüsselwort "Mediterran" umfassen kann, sodass zu bestimmten Rezeptarten unterschiedliche Themenkategorien passen können. Insbesondere können jedoch die Themenkategorie und die Rezeptart zumindest teilweise oder vollständig übereinstimmen. Durch die Rezeptart ist es möglich für die Auswahl des Unterhaltungsmediums eine weitere Zwischenebene vorzusehen, welche weitere Zuordnungen innerhalb einer Datenstruktur erlauben kann. Dadurch kann wiederum eine verbesserte Auswahl des Unterhaltungsmediums in Hinblick auf die jeweilige Situation ermöglicht sein.

Vorzugsweise kann bei einem erfindungsgemäßen Verfahren das Festlegen des Rezeptes durch ein Auswählen des Rezeptes aus einer Rezeptsammlung durch einen Benutzer oder automatisch erfolgen. Die Rezeptsammlung kann, wie zuvor beschrieben, eine Auflistung einer Datenbank umfassen, wobei in der Datenbank Metadaten und/oder tatsächliche Daten der Rezepte vorgesehen sein können. So ist es denkbar, dass in der Datenbank lediglich die Metadaten, wie z. B. der Name und/oder Stichwörter der Rezepte hinterlegt sind und die eigentlichen Kochschritte des Rezeptes erst nach Auswahl, z. B. durch Herunterladen aus dem Internet, beschafft werden. Bei der automatischen Auswahl des Rezeptes kann bspw. durch den Benutzer die Rezeptart bestimmt werden und/oder die Auswahl auf weiteren Eingaben des Benutzers, wie z. B. Informationen zu vorhandenen Zutaten, erfolgen. Durch die Vorgabe des Rezeptes und der Rezeptsammlung kann eine Auswahl des Unterhaltungsmediums bzw. die Zuordnung der Themenkategorie erleichtert sein, sodass ein passendes Unterhaltungsmedium zielgerichteter ausgewählt werden kann.

Vorteilhafterweise kann ein erfindungsgemäßes Verfahren ferner folgende Schritte umfassen:
- Zugriff auf eine externe Datenbank,
- Bereitstellen einer externen Unterhaltungsmediensammlung durch die externe Datenbank,
insbesondere wobei das Bereitstellen des Unterhaltungsmediums durch die externe Unterhaltungsmediensammlung erfolgt. Der Zugriff, insbesondere der Küchenmaschine, auf die externe Datenbank kann vorzugsweise kabellos, d. h. z. B. optisch, per Bluetooth oder per WLAN, oder kabelgebunden erfolgen. Die externe Datenbank kann vorzugsweise ein USB-Speichergerät, einen Internet-Streamingdienst, eine Cloud und/oder dergleichen umfassen. Insbesondere kann die externe Datenbank auf einem externen Server vorgesehen sein. Die externe Unterhaltungsmediensammlung umfasst vorzugsweise eine Datenbank eines Streamingdienstes, ein Verzeichnis und/oder eine Ordnerstruktur von Dateien auf einem USB-Speichergerät oder dergleichen. Durch die externe Datenbank ist, insbesondere unabhängig von der Küchenmaschine, die Auswahl des Unterhaltungsmediums erweiterbar. So ist es denkbar, dass der Benutzer über einen Abo-Dienst Zugang zur Unterhaltungsmediensammlung erhält und/oder diese, z. B. durch Zukäufe, erweitern kann. Ferner ist es durch die externe Unterhaltungsmediensammlung nicht notwendig, dass die Unterhaltungsmedien direkt auf der Küchenmaschine vorgesehen sind, sodass eine Speichereinheit der Küchenmaschine geringer dimensioniert sein kann.

Es ist des Weiteren bei einem erfindungsgemäßen Verfahren denkbar, dass das Verfahren folgenden Schritt aufweist:
- Bereitstellen einer internen Unterhaltungsmediensammlung durch die Küchenmaschine,
insbesondere wobei das Bereitstellen des Unterhaltungsmediums durch die interne Unterhaltungsmediensammlung erfolgt. Die interne Unterhaltungsmediensammlung kann vorteilhafterweise direkt mit der Anschaffung der Küchenmaschine zur Verfügung gestellt werden, sodass bspw. zumindest einige Musiktitel bereits auf der Küchenmaschine vorhanden sind. Insbesondere kann die Auswahl des Unterhaltungsmediums aus der internen und/oder der externen Unterhaltungsmediensammlung erfolgen. So ist es denkbar, dass einige Unterhaltungsmedien durch die interne Unterhaltungsmediensammlung bereitgestellt sind und einige Unterhaltungsmedien durch die externe Unterhaltungsmediensammlung, so dass eine breitere Auswahl aus der internen und externen Unterhaltungsmediensammlung in Kombination möglich ist. Bei einer rein internen Unterhaltungsmediensammlung ist es von Vorteil, dass die Küchenmaschine nicht mit einer externen Datenbank verbunden wird und somit eine Internetverbindung oder überhaupt eine Schnittstelle zur externen Datenbank nicht notwendig ist. Ferner kann die interne Unterhaltungsmediensammlung auf interne, bereitgestellte Rezepte abgestimmt sein, sodass der Zugriff auf eine externe Datenbank nicht notwendig ist. Vorzugsweise kann die interne und/oder die externe Unterhaltungsmediensammlung einer Themenkategorie zugeordnet sein, insbesondere so dass sich die Zuordnung des bereitzustellenden Unterhaltungsmediums aus der Zuordnung der Unterhaltungsmediensammlung zu der Themenkategorie ergibt.

Im Rahmen der Erfindung kann das Verfahren ferner folgenden Schritt umfassen:
- Wiedergabe des Unterhaltungsmediums,
insbesondere wobei die Wiedergabe des Unterhaltungsmediums durch die Küchenmaschine und/oder durch ein Ansteuern zumindest einer externen Wiedergabevorrichtung erfolgt. Wird die externe Wiedergabevorrichtung angesteuert, kann die externe Wiedergabevorrichtung bspw. ein Signal von der externen Datenbank und/oder von der Küchenmaschine erhalten, welches die externe Wiedergabevorrichtung ansteuert. Insbesondere sind auch mehrere externe Wiedergabevorrichtungen ansteuerbar. So ist es denkbar, dass die externe Wiedergabevorrichtung nur indirekt mit der Küchenmaschine verbunden ist und vollständig von einem externen Server angesteuert wird. Zusätzlich oder alternativ kann auch die Küchenmaschine eine interne Wiedergabevorrichtung aufweisen. Eine Wiedergabevorrichtung im Sinne der vorliegenden Erfindung kann vorzugsweise einen Lautsprecher und/oder eine Anzeigevorrichtung umfassen, über welche das Unterhaltungsmedium dem Benutzer präsentierbar ist. Eine interne Wiedergabevorrichtung kann bspw. ein Display der Küchenmaschine und/oder einen Lautsprecher der Küchenmaschine aufweisen. Eine externe Wiedergabevorrichtung kann ein Mobiltelefon, eine HiFi-Anlage, einen Fernseher und/oder dergleichen umfassen. Durch die Integration der Wiedergabe in das Verfahren, ist es möglich, dass das Unterhaltungsmedium direkt für den Benutzer abgespielt werden kann. Dadurch kann das Kocherlebnis weiter automatisiert und der Komfort für den Benutzer verbessert sein.

Ferner kann ein erfindungsgemäßes Verfahren folgende Schritte umfassen:
- Zusammenstellen einer Profilsammlung aus unterschiedlichen Unterhaltungsmedien,
- Abspeichern der Profilsammlung,
insbesondere wobei die Profilsammlung automatisch anhand einer Historie des Benutzers oder durch eine Auswahl des Benutzers zusammengestellt wird. Die Profilsammlung kann eine Datenbank umfassen, welche die unterschiedlichen Unterhaltungsmedien speichert oder zumindest Metadaten zu den Unterhaltungsmedien aufweist. So ist es denkbar, dass in der Datenbank Verweise auf die Unterhaltungsmedien vorhanden sind, so dass diese über die Verweise, insbesondere einzeln, zur Wiedergabe aufgerufen werden können. Auf Grundlage der Profilsammlung kann zumindest einer oder mehrere Verfahrensschritte wiederholt werden. So ist es bspw. denkbar, dass innerhalb der Profilsammlung aufeinanderfolgend mehrere Unterhaltungsmedien bereitgestellt werden, wobei die Profilsammlung selbst einer Themenkategorie zugeordnet sein kann oder die Unterhaltungsmedien innerhalb der Profilsammlung in Abhängigkeit der Themenkategorie ausgewählt werden. Unter der Historie des Benutzers kann vorzugsweise ein Nutzerverhalten verstanden werden, insbesondere welches sich wiederholt. So ist es denkbar, dass aus in der Vergangenheit getätigten Auswahlen von Rezepten und/oder Unterhaltungsmedien die Profilsammlung erstellt wird. Insbesondere kann die Profilsammlung erweiterbar sein. Somit ist das Kocherlebnis personalisierbar, wobei durch die Profilsammlung sichergestellt sein kann, dass das bereitgestellte Unterhaltungsmedium dem Benutzer gefällt. Insbesondere kann die Profilsammlung einem Benutzerprofil zugeordnet sein und das Verfahren folgenden Schritt umfassen:
- Auswahl eines Benutzerprofils, welchem die Profilsammlung zugeordnet ist.

Somit können bspw. mehrere Benutzer der Küchenmaschine individuelle Profilsammlungen anlegen und/oder auf einem Server mehrere Benutzerprofile mit mehreren Profilsammlungen angelegt sein.

Vorzugsweise kann bei einem erfindungsgemäßen Verfahren das Verfahren ferner folgenden Schritt umfassen:
- Senden der Profilsammlung über eine Übertragungsschnittstelle.

Die Übertragungsschnittstelle kann vorteilhafterweise zur Übertragung der Profildaten an ein Mobiltelefon und/oder einen Server ausgebildet sein. Dadurch ist es bspw. denkbar, dass ein Benutzer seine Profilsammlung mit anderen Benutzern teilen kann, sodass auch die anderen Benutzer Zugriff auf die bereits zuvor angelegte Profilsammlung haben können.

Gemäß einem weiteren Aspekt der Erfindung ist eine Küchenmaschine zur Zubereitung von Lebensmitteln beansprucht. Die Küchenmaschine weist eine Benutzerschnittstelle auf, durch welche eine Benutzereingabe zum Festlegen eines Rezeptes ermöglicht ist. Ferner weist die Küchenmaschine eine Steuereinheit auf, die zum Bestimmen einer dem Rezept zugeordneten Themenkategorie ausgebildet ist, wobei die Steuereinheit mit einer Speichereinheit in Kommunikationsverbindung bringbar ist, so dass ein Unterhaltungsmedium in Abhängigkeit der Themenkategorie bereitstellbar ist. Die Steuereinheit kann vorteilhafterweise einen Mikroprozessor, eine CPU, und/oder eine integrierte Schaltung umfassen. Das Unterhaltungsmedium ist insbesondere in der Speichereinheit abgespeichert ist, sodass das Unterhaltungsmedium abrufbar ist.

Damit bringt eine erfindungsgemäße Küchenmaschine die gleichen Vorteile mit sich, wie sie bereits ausführlich mit Bezug auf ein erfindungsgemäßes Verfahren beschrieben worden sind. Das Festlegen des Rezeptes durch den Benutzer kann vorteilhafterweise durch ein direktes Festlegen des Rezeptes, z.B. durch Auswahl über einen Touchscreen, oder eine indirektes Festlegen des Rezeptes über eine Auswahl einer Rezeptart über die Benutzereingabe ausgeführt werden. Die Speichereinheit kann vorzugsweise eine Unterhaltungsmediensammlung umfassen. So kann die Speichereinheit eine Datenbank aufweisen, in welcher Metadaten oder tatsächliche Daten von unterschiedlichen Unterhaltungsmedien abgespeichert sind. Die Benutzerschnittstelle kann vorzugsweise optisch, mechanisch und/oder akustisch ausgebildet sein. So ist es denkbar, dass die Benutzerschnittstelle eine oder mehrere Bedientasten an der Küchenmaschine, eine Gestenerkennung, eine Spracherkennung oder dergleichen umfasst. Die Kommunikationsverbindung der Steuereinheit mit der Speichereinheit kann bspw. durch eine Verkabelung innerhalb der Küchenmaschine vorgesehen sein, wenn die Speichereinheit eine interne Speichereinheit der Küchenmaschine ist. Dementsprechend kann die Steuereinheit ständig mit der ersten Speichereinheit in Kommunikationsverbindung stehen. Ferner ist es jedoch denkbar, dass die Küchenmaschine drahtlos oder kabelgebunden mit einer externen Speichereinheit in Kommunikationsverbindung bringbar ist. Dazu kann vorzugsweise eine Übertragungsschnittstelle zur Kommunikation mit der Steuereinheit und/oder der Speichereinheit vorgesehen sein, insbesondere wobei die Kommunikationsverbindung z.B. eine LAN, WLAN, Bluetooth, oder USB-Verbindung ist.

Im Rahmen der Erfindung ist ferner denkbar, dass die Benutzerschnittstelle eine Anzeige umfasst, insbesondere wobei eine Rezeptart und/oder das Rezept dem Benutzer durch die Anzeige anzeigbar ist. Dadurch kann bspw. eine visuelle Kommunikation mit dem Benutzer ermöglicht sein, wobei das Rezept und/oder die Rezeptart über die Benutzerschnittstelle auswählbar sein kann. Vorzugsweise kann es sich bei der Benutzerschnittstelle um einen Touchscreen handeln, welcher eine komfortable Eingabemöglichkeit für den Benutzer ermöglicht. Durch die Benutzerschnittstelle kann somit eine einfache intuitive Bedienung der Küchenmaschine erreicht werden und gleichzeitig dem Benutzer eine Fülle an Informationen zur Verfügung gestellt werden. Dadurch kann das Kocherlebnis insgesamt weiter verbessert sein.

Es ist bei einer erfindungsgemäßen Küchenmaschine ferner denkbar, dass die Steuereinheit dazu ausgebildet ist, dem Benutzer über die Benutzerschnittstelle ein Erstellen einer Profilsammlung zu ermöglichen, wobei die Profilsammlung in der Speichereinheit oder einer weiteren Speichereinheit abspeicherbar ist. Die weitere Speichereinheit kann vorzugsweise ein interner oder ein externer Speicher sein. Es ist denkbar, dass in der Küchenmaschine eine erste, interne Speichereinheit vorgesehen ist und die Küchenmaschine mit einer zweiten, externen Speichereinheit verbindbar sein kann. Die Profilsammlung kann ferner intern und/oder extern abspeicherbar sein. Insbesondere kann zwischen der ersten und zweiten Speichereinheit eine Synchronisation vorgesehen sein, welche die Daten beider Speichereinheiten abgleicht. Durch die Profilsammlung ist das Kocherlebnis weiter personalisierbar und somit insgesamt für den Benutzer verbesserbar.

Es ist ferner denkbar, dass bei einer erfindungsgemäßen Küchenmaschine die Speichereinheit eine externe Datenbank und/oder einen internen Speicher der Küchenmaschine mit einer internen Datenbank umfasst. Insbesondere können die externe und die interne Datenbank somit eine gemeinsame Datenbank bilden, um das Unterhaltungsmedium bereitzustellen. Dadurch kann die Auswahl aus unterschiedlichen Unterhaltungsmedien vergrößert sein, während der interne Speicher begrenzt sein kann, die externe Datenbank auf einem Server aber jederzeit erweiterbar sein kann. Dadurch kann die Auswahl der zur Verfügung stehenden Unterhaltungsmedien anpassbar sein und somit das Unterhaltungsmedium aus aktuellen Unterhaltungsmedien ausgewählt und bereitgestellt werden.

Bei einer erfindungsgemäßen Küchenmaschine ist ferner denkbar, dass die Steuereinheit dazu ausgebildet ist, eine externe Wiedergabevorrichtung derart anzusteuern, dass das Unterhaltungsmedium durch die externe Wiedergabevorrichtung abspielbar ist. Dazu kann die Steuereinheit bspw. über eine Übertragungsschnittstelle der Küchenmaschine direkt mit der externen Wiedergabevorrichtung in Kommunikationsverbindung stehen oder indirekt über einen Server. Dadurch kann z.B. eine HiFi-Anlage in einem Haushalt der Küchenmaschine ansteuerbar sein, sodass der Benutzer eine hohe Klangqualität der Hifi-Anlage genießen kann, während der Bauraum der Küchenmaschine gering gehalten werden kann und die Küchenmaschine nur einen geringen Platzbedarf in der Küche des Benutzers beansprucht.

Im Rahmen der Erfindung ist ferner denkbar, dass eine interne Wiedergabevorrichtung vorgesehen ist, welche durch die Steuereinheit ansteuerbar ist, sodass das Unterhaltungsmedium abspielbar ist. Vorzugsweise kann die interne Wiedergabevorrichtung einen Lautsprecher an der Küchenmaschine umfassen. Somit ist eine externe Wiedergabevorrichtung nicht notwendig und der Benutzer kann mit Kauf der Küchenmaschine in den Genuss des Unterhaltungsmediums über die interne Wiedergabevorrichtung kommen. Weiterhin kann die interne Wiedergabevorrichtung besonders vorteilhaft in ihrer Kompatibilität zur Küchenmaschine abgestimmt sein. Damit kann das verbesserte Kocherlebnis in einfacher Art und Weise dem Benutzer zur Verfügung gestellt werden.

Die Steuereinheit bei einer erfindungsgemäßen Küchenmaschine ist zum Initiieren, insbesondere zum Durchführen, eines erfindungsgemäßen Verfahrens ausgebildet. Unter dem Initiieren des Verfahrens kann dabei verstanden werden, dass zumindest eine teilweise Abarbeitung der Verfahrensschritte, z.B. durch einen externen Server, durch ein Signal der Küchenmaschine ausgelöst wird. So kann beispielsweise die Auswahl des Rezeptes durch den Benutzer an den Server gesendet werden, welcher anhand der zur Verfügung gestellten Daten das Unterhaltungsmedium auswählt. Vorzugsweise ist die Steuereinheit jedoch dazu ausgebildet, das Verfahren insbesondere innerhalb der Küchenmaschine durchzuführen. Dazu kann durch die Steuereinheit vorteilhafterweise eine entsprechende Rechenkapazität zur Verfügung gestellt sein.

Gemäß einem weiteren Aspekt der Erfindung ist ein Ambientesystem mit einem Server zum Bereitstellen einer externen Unterhaltungsmediensammlung und einer erfindungsgemäßen Küchenmaschine beansprucht. Die Küchenmaschine ist dabei mit dem Server, insbesondere zum Zugriff auf eine externe Datenbank des Servers, in Kommunikationsverbindung bringbar. Vorzugsweise weist die Küchenmaschine dazu eine Übertragungsschnittstelle auf, über welche die Kommunikationsverbindung zwischen der Küchenmaschine und der externen Datenbank realisierbar ist. Insbesondere kann vorgesehen sein, dass eine externe Wiedergabevorrichtung zur Wiedergabe des Unterhaltungsmediums aus der externen und/oder einer internen Unterhaltungsmediensammlung vorgesehen ist. Dabei kann die Wiedergabevorrichtung mit der Küchenmaschine oder der externen Datenbank in Kommunikationsverbindung stehen oder in Kommunikationsverbindung bringbar sein, sodass das Unterhaltungsmedium insbesondere automatisch wiedergebbar ist. Somit bringt ein erfindungsgemäßes Ambientesystem die gleichen Vorteile mit sich, wie sie bereits ausführlich mit Bezug auf eine erfindungsgemäße Küchenmaschine und/oder ein erfindungsgemäßes Verfahren beschrieben worden sind.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehenden Merkmale und/oder Vorteile, einschließlich konstruktiver Einzelheiten, räumliche Anordnungen und Verfahrensschritte, können erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Figur 1: eine erfindungsgemäße Küchenmaschine in schematischer Darstellung in einem ersten Ausführungsbeispiel,
- Figur 2: eine erfindungsgemäße Küchenmaschine in einem erfindungsgemäßen Ambientesystem in einem weiteren Ausführungsbeispiel,
- Figur 3: eine Datenstruktur zum Bereitstellen eines Unterhaltungsmediums für ein erfindungsgemäßes Verfahren und/oder eine erfindungsgemäße Küchenmaschine in einem weiteren Ausführungsbeispiel,
- Figur 4: eine schematische Darstellung von Verfahrensschritten eines erfindungsgemäßen Verfahrens in einem weiteren Ausführungsbeispiel,
- Figur 5: eine schematische Darstellung von Verfahrensschritten eines erfindungsgemäßen Verfahrens in einem weiteren Ausführungsbeispiel.

In den nachfolgenden Figuren werden für die gleichen technischen Merkmale auch von unterschiedlichen Ausführungsbeispielen die identischen Bezugszeichen verwendet.

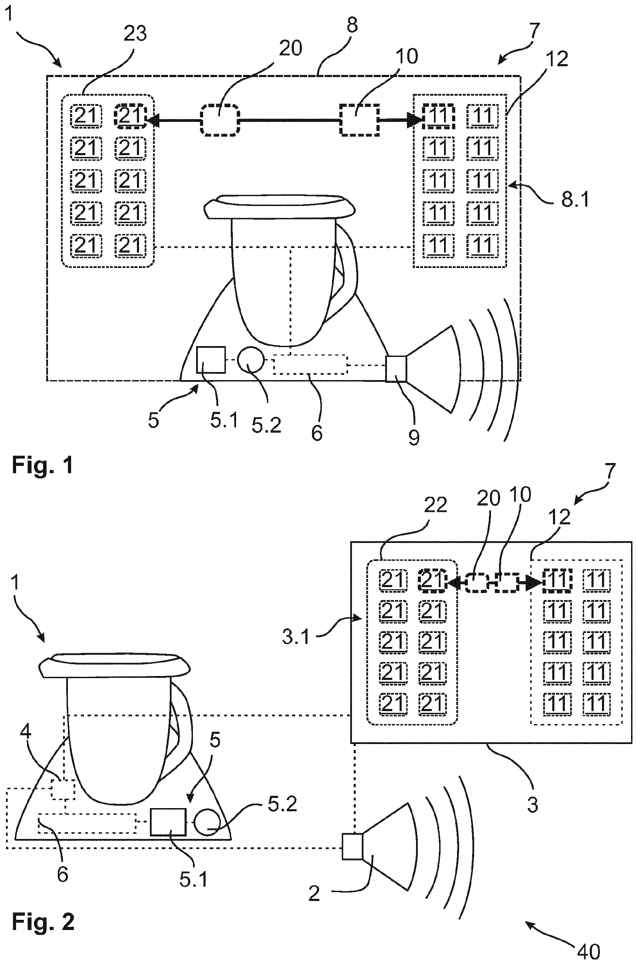

Figur 1 zeigt eine erfindungsgemäße Küchenmaschine 1 zum Zubereiten von Lebensmitteln in einem ersten, schematisch dargestellten Ausführungsbeispiel. Die Küchenmaschine 1 weist dabei eine Benutzerschnittstelle 5 auf, welche eine Anzeige 5.1 sowie ein Eingabemittel 5.2 in Form eines Drehknopfes umfasst. Vorzugsweise ist die Anzeige 5.1 als Touchscreen ausgebildet, sodass der Benutzer auch über die Anzeige 5.1 eine Auswahl vornehmen kann. Die Benutzerschnittstelle 5 ist ferner mit einer Steuereinheit 6 der Küchenmaschine 1 verbunden. Über die Benutzerschnittstelle 5 ist insbesondere ein Rezept 11 aus einer Rezeptsammlung 12 auswählbar, wobei das Rezept 11 als Leitfaden für das Zubereiten der Lebensmittel dient. Über die Steuereinheit 6 kann dabei eine Themenkategorie 20 bestimmt werden, welche dem Rezept 11 zugeordnet ist. Wählt der Benutzer bspw. ein Nudelrezept aus, in welchem italienische Kräuter verwendet werden, kann durch die Steuereinheit 6 aus dem Rezept 11 eine Rezeptart 10 ermittelt werden, welche "Italienisch" ist. Eine dem Rezept 11 über die Rezeptart 10 zugeordnete Themenkategorie 20 kann dementsprechend ebenfalls das Stichwort "Italienisch" und/oder "Mediterran" umfassen. Ist die Themenkategorie 20 bestimmt, kann durch die Steuereinheit 6 auf eine Speichereinheit 7 zugegriffen werden, welche einen internen Speicher 8 mit einer internen Datenbank 8.1 aufweist. Die interne Datenbank 8.1 kann vorzugsweise eine interne Unterhaltungsmediensammlung 23 umfassen, aus welcher über die Steuereinheit 6 ein Unterhaltungsmedium 21 ausgewählt werden kann. Im zuvor genannten Beispiel handelt es sich bei dem ausgewählten Unterhaltungsmedium 21 insbesondere um italienische Musik. Diese kann schließlich über eine interne Wiedergabevorrichtung 9 und/oder eine externe Wiedergabevorrichtung 2 wiedergegeben werden. Dadurch kann bereits während des Kochvorgangs mit der Küchenmaschine 1 und/oder nach dem Kochvorgang mit der Küchenmaschine 1 ein Ambiente erzeugt werden, welches zu dem ausgewählten Rezept 11 passt und somit das Kocherlebnis mit der Küchenmaschine 1 für den Benutzer verbessert werden. Für den Ablauf des Rezeptes 11 kann die Küchenmaschine 1 vorzugsweise ein Rührwerk sowie zumindest ein Heizmittel umfassen (nicht dargestellt) und dem Benutzer die einzelnen durchzuführenden Schritte des Rezeptes 11 über die Anzeige 5.1 vorgeben.

Figur 2 zeigt ein erfindungsgemäßes Ambientesystem 40 mit einer Küchenmaschine 1 und einem Server 3, der eine externe Datenbank 3.1 umfasst. In der externen Datenbank 3.1 sind zumindest eine Rezeptsammlung 12 mit Rezepten 11 sowie Unterhaltungsmedien 21 gespeichert. Den Unterhaltungsmedien 21 ist dabei eine Themenkategorie 20 zugeordnet und den Rezepten 11 eine aktuelle Rezeptart 10. Vorzugsweise sind wiederum Rezeptarten 10 und Themenkategorien 20 ebenfalls einander zugeordnet. Über eine Benutzerschnittstelle 5 kann ein Benutzer über die Küchenmaschine 1 auf die externe Datenbank 3.1 zumindest indirekt zugreifen. Dazu ist die Benutzerschnittstelle 5 mit einer Steuereinheit 6 der Küchenmaschine 1 verbunden, welche mit einer Übertragungsschnittstelle 4 verbunden ist. Über die Übertragungsschnittstelle 4 steht die Küchenmaschine 1 ferner mit dem Server 3 in Kommunikationsverbindung, sodass auf die externe Datenbank 3.1 zugegriffen werden kann. Somit können bspw. an einer Anzeige 5.1 der Benutzerschnittstelle 5 dem Benutzer unterschiedliche Rezepte 11 zur Auswahl angezeigt werden, wobei der Benutzer ein Rezept 11 oder eine Rezeptart 10 auswählt und die Steuereinheit 6 anhand des Rezeptes 11 die Rezeptart 10 ermittelt oder entsprechend der Rezeptart 10 ein Rezept 11 auswählt. Aus einer Unterhaltungsmediensammlung 22 des Servers 3 wird entsprechend in Abhängigkeit der Themenkategorie 20 ein Unterhaltungsmedium 21 ausgewählt, welches auf einer externen Wiedergabevorrichtung 2 abgespielt werden kann. Bei der externen Wiedergabevorrichtung 2 kann es sich bspw. um eine HiFi-Anlage, einen Fernseher oder dergleichen handeln. Dadurch, dass die Daten des Unterhaltungsmediums 21 auf dem Server 3 vorgesehen sind, ist es nicht notwendig, eine interne Speichereinheit der Küchenmaschine 1 mit den Unterhaltungsmedien 21 vorzusehen, sodass ein Speicherplatz des Servers 3 genutzt werden kann, welcher einfacher zu warten und/oder zu erweitern ist, als ein möglicher interner Speicher der Küchenmaschine 1. Insbesondere kann der Server 3 direkt mit der externen Wiedergabevorrichtung 2 kommunizieren oder die Kommunikation kann über die Küchenmaschine 1, insbesondere die Steuereinheit 6 der Küchenmaschine 1, erfolgen. Somit kann für einen Benutzer ein Ambiente geschaffen werden, welches zu dem ausgewählten Rezept 11 passt und schließlich das Kocherlebnis und/oder das Ambiente des anschließenden Essens verbessert.

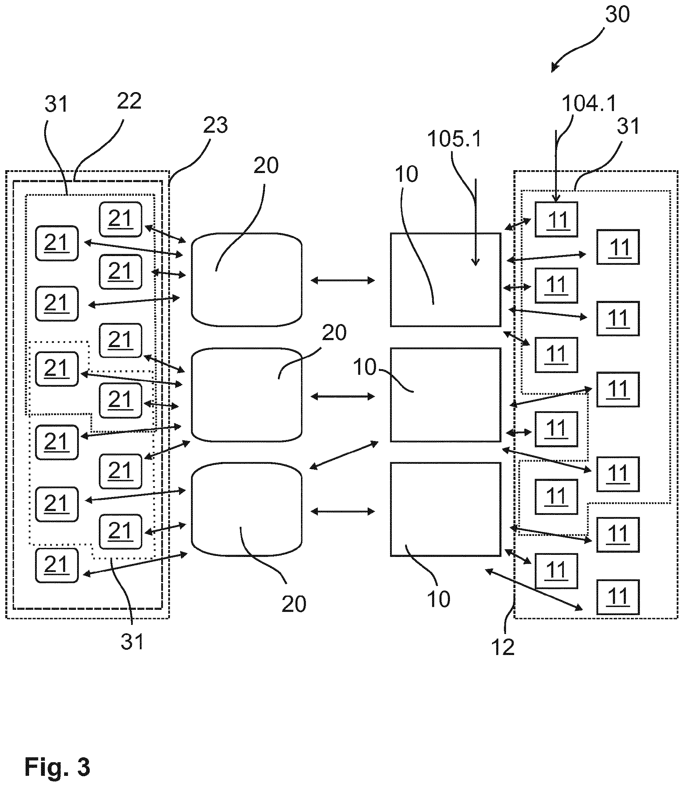

Figur 3 zeigt eine Datenstruktur 30 zum Bereitstellen eines Unterhaltungsmediums 21 in einem weiteren Ausführungsbeispiel. Insbesondere kann die Datenstruktur 30 innerhalb einer Datenbank vorgesehen sein, die eine interne Datenbank 8.1 oder eine externe Datenbank 3.1 umfassen kann. Dabei sind innerhalb der Datenstruktur 30 Rezepte 11 vorgesehen, die jeweils einer Rezeptart 10 zugeordnet sind. Wählt nun ein Benutzer die Rezeptart 10 und/oder das Rezept 11 aus, kann bspw. mittels einer Steuereinheit 6 wechselseitig auf die Rezeptart 10 und/oder das Rezept 11 geschlossen werden. Vorzugsweise sind die Rezepte 11 Teil einer Profilsammlung 31, wobei die Profilsammlung 31 bspw. mit einem Benutzerkonto verknüpft sein kann, sodass innerhalb der Datenstruktur 30 zugeordnet ist, welche Rezepte 11 ein Benutzer favorisiert. Über die Rezeptart 10 ist eine Themenkategorie 20 indirekt einem Rezept 11 zugeordnet, wobei der Themenkategorie 20 wiederum unterschiedliche Unterhaltungsmedien 21 zugeordnet sind. Auch für die Unterhaltungsmedien 21 kann vorzugsweise eine Profilsammlung 31 vorgesehen sein oder mehrere Profilsammlungen 31. Dabei können sich die Profilsammlungen 31 auch überschneiden und/oder jedem Benutzer kann zumindest eine Profilsammlung 31 zugeordnet sein. Ferner können die Unterhaltungsmedien 21 einer externen Unterhaltungsmediensammlung 22 und/oder internen Unterhaltungsmediensammlung 23 entstammen. Die externe Unterhaltungsmediensammlung 22 kann bspw. Unterhaltungsmedien 21 umfassen, welche von einem Server 3 abrufbar sind, und die interne Unterhaltungsmediensammlung 23 kann vorzugsweise solche Unterhaltungsmedien 21 aufweisen, welche in einer internen Datenbank 8.1 eines internen Speichers 8 der Küchenmaschine 1 enthalten sind. Vorzugsweise können die interne und die externe Unterhaltungsmediensammlung 22, 23 synchronisiert sein, insbesondere so dass beide zumindest teilweise identische Daten enthalten. Somit besteht zwischen jedem Rezept 11 zumindest eine zumindest indirekte Zuordnung eines Unterhaltungsmediums 21, wobei die tatsächliche Auswahl des Unterhaltungsmediums 21 anhand des Rezeptes 11 durch viele weitere Faktoren bestimmt sein kann, wie bspw. eine Historie 101.2 über das Verhalten des Benutzers oder dergleichen.

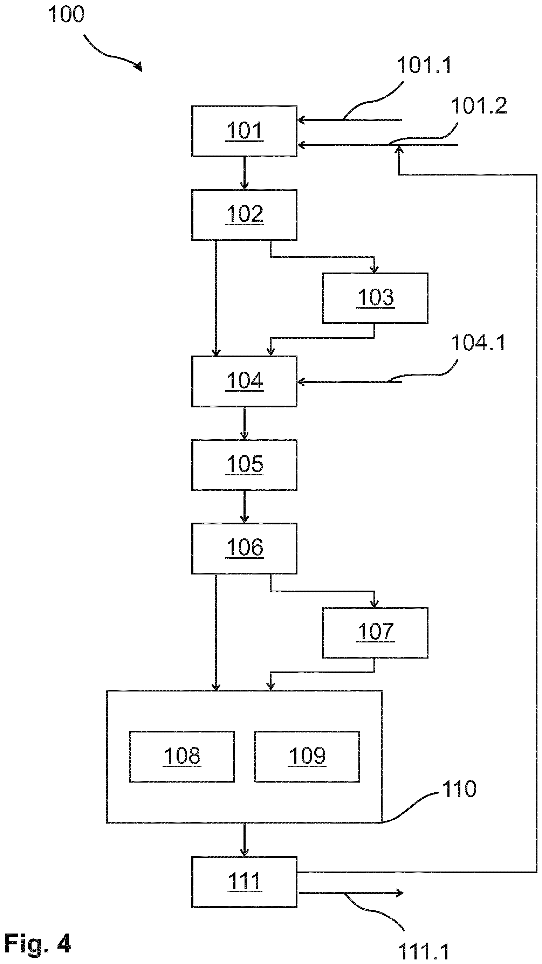

Figur 4 zeigt Verfahrensschritte eines erfindungsgemäßen Verfahrens 100 zum Betreiben einer Küchenmaschine 1, die zum Zubereiten von Lebensmitteln geeignet ist, in schematischer Ansicht in einem weiteren Ausführungsbeispiel. Dabei ist im Rahmen des Verfahrens 100 ein Zusammenstellen 101 einer Profilsammlung 31 vorgesehen. Die Profilsammlung 31 kann vorzugsweise Rezepte 11 und/oder Unterhaltungsmedien 21 umfassen, welche ein Benutzer favorisiert. Dazu kann eine Vorauswahl 101.1 durch den Benutzer erfolgen oder die Profilsammlung 31 kann automatisch aufgrund einer Historie 101.2 eines Benutzers zusammengestellt werden. Werden die Schritte des Verfahrens 100 häufig wiederholt, kann die Profilsammlung 31 selbstlernend angepasst werden und das Kocherlebnis dadurch weiter an den Benutzer anpasst und somit personalisiert werden. Ein Abspeichern 102 der Profilsammlung 31 kann dabei auf einem Server 3 in einer externen Datenbank 3.1 und/oder in einer internen Datenbank 8.1 eines internen Speichers 8 durchgeführt werden, sodass die Profilsammlung 31 dem Benutzer dauerhaft beim Einschalten der Küchenmaschine 1 zur Verfügung steht. Ist die Profilsammlung 31 auf einem Server 3 vorgesehen, kann ferner ein Senden 103 der Profilsammlung 31 über eine Übertragungsschnittstelle 4 der Küchenmaschine 1 erfolgen. Dadurch kann der Benutzer seine eigene Profilsammlung 31 beispielsweise mit anderen Benutzern teilen, so dass diese ebenfalls von der Zusammenstellung 101 profitieren können. Vorzugsweise erfolgt daraufhin ein Festlegen 104 eines Rezeptes 11. Dies kann z.B. durch einen Benutzer an einer Benutzerschnittstelle 5 erfolgen. So können vorteilhafterweise verschiedene Rezepte 11 über eine Anzeige 5.1 einem Benutzer angeboten werden, sodass sich der Benutzer lediglich für eines der Rezepte 11 entscheidet und eine entsprechende manuelle Auswahl 104.1 vornimmt. Auf Grundlage der Festlegung 104 wird daraufhin ein Bestimmen 106 einer Themenkategorie 20 durchgeführt, die dem Rezept 11 zugeordnet ist. Dazu kann vorzugsweise zuvor ein Bestimmen 105 einer Rezeptart 10 durchgeführt werden, die insbesondere zu der Themenkategorie 20 korrespondiert. Anschließend kann ein erneutes Zugreifen 107 der Küchenmaschine 1 auf die externe Datenbank 3.1 erfolgen, wenn Unterhaltungsmedien 21 auf der externen Datenbank 3.1 vorgesehen sind. Anschließend an das Bestimmen 106 der Themenkategorie 20 oder an der Zugriff 107 der Küchenmaschine 1 auf die externe Datenbank 3.1 kann ein Bereitstellen 110 eines Unterhaltungsmediums 21 in Abhängigkeit der Themenkategorie 20 erfolgen. Dabei kann das Bereitstellen 110 des Unterhaltungsmediums 21 ein Bereitstellen 108 einer externen Unterhaltungsmediensammlung 22 und/oder ein Bereitstellen 109 einer internen Unterhaltungsmediensammlung 23 umfassen, wobei ein Unterhaltungsmedium 21 aus der externen und/oder internen Unterhaltungsmediensammlung 22, 23 ausgewählt wird. Anschließend erfolgt eine Wiedergabe 111 des Unterhaltungsmediums 21, vorzugsweise wobei ein Ansteuern 111.1 zumindest einer externen und/oder einer internen Wiedergabevorrichtung 2, 9 durchgeführt wird. Dadurch kommt der Benutzer in den Genuss des Unterhaltungsmediums 21, sodass das Kocherlebnis insgesamt verbessert sein kann.

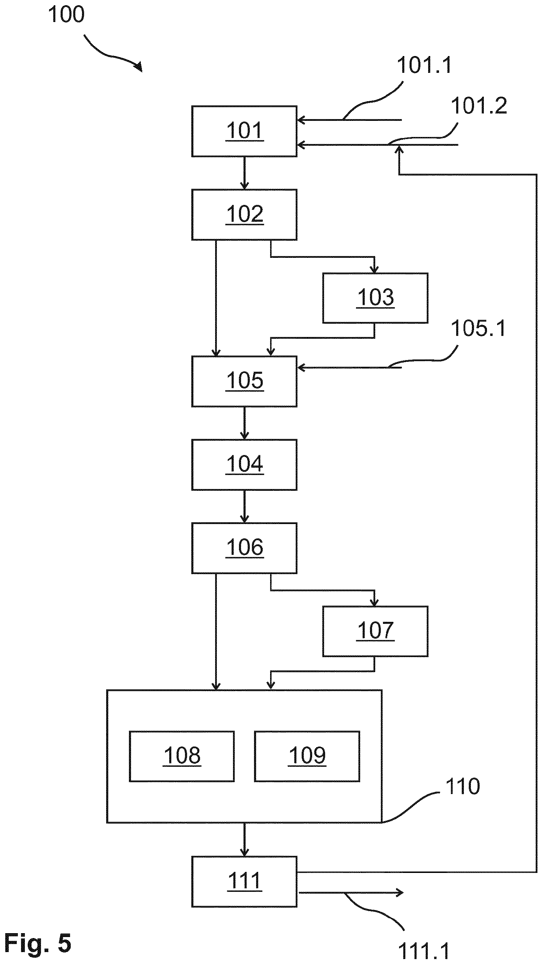

Figur 5 zeigt Verfahrensschritte eines erfindungsgemäßen Verfahrens 100 in einem weiteren Ausführungsbeispiel in schematischer Darstellung. Dabei entspricht das Ausführungsbeispiel der Figur 5 im Wesentlichen dem Ausführungsbeispiel der Figur 4, wobei jedoch ein Festlegen 104 eines Rezeptes 11 zum Zubereiten der Lebensmittel nach einem Bestimmen 105 einer Rezeptart 10 erfolgt. Dabei wird ein Auswählen 105.1 der Rezeptart 10 durch den Benutzer oder automatisch durchgeführt und anhand von weiteren Kriterien, wie bspw. einer Historie 101.2 eines Benutzerverhaltens, ein zu der Rezeptart 10 passendes Rezept 11 ausgewählt. Anschließend erfolgt, wie zum vorherigen Ausführungsbeispiel beschrieben, ein Bestimmen 106 einer Themenkategorie 20, die dem Rezept 11 insbesondere über die Rezeptart 10 zugeordnet ist.

Die voranstehende Erläuterung der Ausführungsform beschreibt die vorliegende Erfindung ausschließlich im Rahmen von Beispielen.

### Bezugszeichenliste

- 1: Küchenmaschine
- 2: externe Wiedergabevorrichtung
- 3: Server
- 3.1: externe Datenbank
- 4: Übertragungsschnittstelle
- 5: Benutzerschnittstelle
- 5.1: Anzeige
- 5.2: Eingabemittel
- 6: Steuereinheit
- 7: Speichereinheit
- 8: interner Speicher
- 8.1: interne Datenbank
- 9: interne Wiedergabevorrichtung

- 10: aktuelle Rezeptart
- 11: Rezept
- 12: Rezeptsammlung

- 20: Themenkategorie
- 21: Unterhaltungsmedium
- 22: externe Unterhaltungsmediensammlung
- 23: interne Unterhaltungsmediensammlung

- 30: Datenstruktur
- 31: Profilsammlung

- 40: Ambientesystem

- 100: Verfahren
- 101: Zusammenstellen von 31
- 101.1: Auswahl durch 30
- 101.2: Historie
- 102: Abspeichern von 31
- 103: Senden von 31
- 104: Festlegen von 11
- 104.1: manuelle Auswahl von 11
- 105: Bestimmen von 10
- 105.1: manuelle Auswahl von 10
- 106: Bestimmen von 20
- 107: Zugriff auf 3.1
- 108: Bereitstellen von 22
- 109: Bereitstellen von 23
- 110: Bereitstellen von 21
- 111: Wiedergabe von 21
- 111.1: Ansteuern von 2

## Patentansprüche

1. Verfahren (100) zum Betreiben einer Küchenmaschine (1), die zum Zubereiten von Lebensmitteln geeignet ist,
umfassend die folgenden Schritte:
- Festlegen (104) eines Rezeptes (11) zum Zubereiten der Lebensmittel,
- Bestimmen (106) einer Themenkategorie (20), die dem Rezept (11) zugeordnet ist,
- Bereitstellen (110) eines Unterhaltungsmediums (21) in Abhängigkeit der Themenkategorie (20),
wobei das Verfahren (100) ferner folgenden Schritt umfasst:
- Bestimmen (105) einer Rezeptart (10) des Rezeptes (11), über welche die Themenkategorie (20) dem Rezept (11) zugeordnet ist,
wobei die Rezeptart (10) indirekt mit der Themenkategorie (20) verknüpft ist, wobei aus der Rezeptart (10) die Themenkategorie (20) bestimmt wird.

2. Verfahren (100) nach Anspruch 1,
**dadurch gekennzeichnet,**
**dass** Rezeptdaten durch die Küchenmaschine (1) zur Verfügung gestellt werden.

3. Verfahren (100) nach Anspruch 1 oder 2,
**dadurch gekennzeichnet,**
**dass** das Festlegen (104) des Rezeptes (11) durch ein Auswählen des Rezeptes (11) aus einer Rezeptsammlung (12) durch einen Benutzer oder automatisch erfolgt.

4. Verfahren (100) nach einem der vorhergehenden Ansprüche,
**dadurch gekennzeichnet,**
**dass** das Verfahren (100) ferner folgende Schritte umfasst:
- Zugriff (107) auf eine externe Datenbank (3.1),
- Bereitstellen (108) einer externen Unterhaltungsmediensammlung (22) durch die externe Datenbank (3.1),
insbesondere wobei das Bereitstellen (110) des Unterhaltungsmediums (21) durch die externe Unterhaltungsmediensammlung (22) erfolgt.

5. Verfahren (100) nach einem der vorhergehenden Ansprüche,
**dadurch gekennzeichnet,**
**dass** das Verfahren ferner folgenden Schritt aufweist:
- Bereitstellen (109) einer internen Unterhaltungsmediensammlung (23) durch die Küchenmaschine (1),
insbesondere wobei das Bereitstellen (110) des Unterhaltungsmediums (21) durch die interne Unterhaltungsmediensammlung (23) erfolgt.

6. Verfahren (100) nach einem der vorhergehenden Ansprüche,
**dadurch gekennzeichnet,**
**dass** das Verfahren (100) ferner folgenden Schritt umfasst:
- Wiedergabe (111) des Unterhaltungsmediums (21),
insbesondere wobei die Wiedergabe (111) des Unterhaltungsmediums (21) durch die Küchenmaschine (1) und/oder durch ein Ansteuern (111.1) zumindest einer externen Wiedergabevorrichtung (2) erfolgt.

7. Verfahren (100) nach einem der vorhergehenden Ansprüche,
**dadurch gekennzeichnet,**
**dass** das Verfahren (100) ferner folgende Schritte umfasst:
- Zusammenstellen (101) einer Profilsammlung (31) aus unterschiedlichen Unterhaltungsmedien (21),
- Abspeichern (102) der Profilsammlung (31),
insbesondere wobei die Profilsammlung (31) automatisch anhand einer Historie (101.2) des Benutzers oder durch eine Auswahl (101.1) des Benutzers zusammengestellt wird.

8. Verfahren (100) nach einem der vorhergehenden Ansprüche,
**dadurch gekennzeichnet,**
**dass** das Verfahren (100) ferner folgenden Schritt umfasst:
- Senden (103) der Profilsammlung (31) über eine Übertragungsschnittstelle (4).

9. Küchenmaschine (1) zur Zubereitung von Lebensmitteln, aufweisend
eine Benutzerschnittstelle (5), durch welche eine Benutzereingabe zum Festlegen (105) eines Rezeptes (11) ermöglicht ist, und
eine Steuereinheit (6), die zum Bestimmen (106) einer dem Rezept (11) zugeordneten Themenkategorie (20) ausgebildet ist, wobei die Steuereinheit (6) mit einer Speichereinheit (7) in Kommunikationsverbindung bringbar ist, so dass ein Unterhaltungsmedium (21) in Abhängigkeit der Themenkategorie (20) bereitstellbar ist, wobei die Steuereinheit (6) zum Initiieren, insbesondere zum Durchführen, eines Verfahrens (100) nach einem der vorhergehenden Ansprüche ausgebildet ist.

10. Küchenmaschine (1) nach Anspruch 9,
**dadurch gekennzeichnet,**
**dass** die Benutzerschnittstelle (5) eine Anzeige (5.1) umfasst, insbesondere wobei eine Rezeptart (10) und/oder das Rezept (11) dem Benutzer durch die Anzeige (5.1) anzeigbar ist.

11. Küchenmaschine (1) nach Anspruch 9 oder 10,
**dadurch gekennzeichnet,**
**dass** die Steuereinheit (6) dazu ausgebildet ist, dem Benutzer über die Benutzerschnittstelle (5) ein Erstellen einer Profilsammlung (31) zu ermöglichen, wobei die Profilsammlung (31) in der Speichereinheit (7) oder einer weiteren Speichereinheit speicherbar ist.

12. Küchenmaschine (1) nach einem der Ansprüche 9 bis 11
**dadurch gekennzeichnet,**
**dass** die Speichereinheit (7) eine externe Datenbank (3.1) und/oder einen internen Speicher (8) der Küchenmaschine (1) mit einer internen Datenbank (8.1) umfasst.

13. Küchenmaschine (1) nach einem der Ansprüche 9 bis 12,
**dadurch gekennzeichnet,**
**dass** die Steuereinheit (6) dazu ausgebildet ist, eine externe Wiedergabevorrichtung (2) derart anzusteuern, dass das Unterhaltungsmedium (21) durch die externe Wiedergabevorrichtung (2) abspielbar ist, und/oder dass eine interne Wiedergabevorrichtung (9) vorgesehen ist, welche durch die Steuereinheit (6) ansteuerbar ist, so dass das Unterhaltungsmedium (21) abspielbar ist.

14. Ambientesystem (40) aufweisend
einen Server (3) zum Bereitstellen einer externen Unterhaltungsmediensammlung (22) und eine Küchenmaschine (1) nach einem der Ansprüche 9 bis 13,
wobei die Küchenmaschine (1) mit dem Server (3) in Kommunikationsverbindung bringbar ist.

## Claims

1. Method (100) for operating a food processor (1) suitable for preparing food,
comprising the following steps:
- defining (104) a recipe (11) for preparing the food,
- determining (106) a subject category (20) associated with the recipe (11),
- providing (110) an entertainment medium (21) depending on the subject category (20),
the method (100) further comprising the step of:
- determining (105) a recipe type (10) of the recipe (11) via which the subject category (20) is assigned to the recipe (11),
wherein the recipe type (10) is indirectly linked to the subject category (20), wherein the subject category (20) is determined from the recipe type (10).

2. The method (100) according to claim 1,
**characterized in that**
recipe data is provided by the food processor (1).

3. Method (100) according to claim 1 or 2,
**characterized in that**
defining (104) of the recipe (11) is done by selecting the recipe (11) from a recipe collection (12) by a user or automatically.

4. Method (100) according to any one of the preceding claims,
**characterized in that**
the method (100) further comprises the steps of:
- accessing (107) an external database (3.1),
- providing (108) an external entertainment media collection (22) through the external database (3.1),
in particular wherein providing (110) of the entertainment medium (21) is performed by the external entertainment medium collection (22).

5. Method (100) according to any one of the preceding claims,
**characterized in that**
the method further comprises the step of:
- providing (109) an internal entertainment media collection (23) by the food processor (1),
in particular wherein providing (110) the entertainment medium (21) is performed by the internal entertainment medium collection (23).

6. Method (100) according to any one of the preceding claims,
**characterized in that**
the method (100) further comprises the step of:
- playback (111) of the entertainment medium (21),
in particular wherein the playback (111) of the entertainment medium (21) is effected by the food processor (1) and/or by driving (111.1) at least one external playback device (2).

7. Method (100) according to any one of the preceding claims,
**characterized in that**
the method (100) further comprises the steps of:
- assembling (101) a profile collection (31) from different entertainment media (21),
- saving (102) the profile collection (31),
in particular wherein the profile collection (31) is automatically compiled based on a history (101.2) of the user or by a selection (101.1) of the user.

8. Method (100) according to any one of the preceding claims,
**characterized in that**
the method (100) further comprises the step of:
- sending (103) the profile collection (31) via a transmission interface (4).

9. Food processor (1) for the preparation of food, comprising
a user interface (5) through which user input is enabled for defining (105) a recipe (11), and
a control unit (6) which is designed to determine (106) a subject category (20) assigned to the recipe (11), it being possible for the control unit (6) to be brought into a communication link with a memory unit (7), so that an entertainment medium (21) can be provided as a function of the subject category (20), the control unit (6) being designed to initiate, in particular to carry out, a method (100) according to one of the preceding claims.

10. Food processor (1) according to claim 9,
**characterized in that**
the user interface (5) comprises a display (5.1), in particular wherein a recipe type (10) and/or the recipe (11) can be displayed to the user by the display (5.1).

11. Food processor (1) according to claim 9 or 10,
**characterized in that**
the control unit (6) is designed to enable the user to create a profile collection (31) via the user interface (5), it being possible to store the profile collection (31) in the memory unit (7) or in a further memory unit.

12. Food processor (1) according to any one of claims 9 to 11,
**characterized in that**
the memory unit (7) comprises an external database (3.1) and/or an internal memory (8) of the food processor (1) with an internal database (8.1).

13. Food processor (1) according to any one of claims 9 to 12,
**characterized in that**
the control unit (6) is designed to drive an external playback device (2) in such a way that the entertainment medium (21) can be played back by the external playback device (2), and/or **in that** an internal playback device (9) is provided which can be driven by the control unit (6) so that the entertainment medium (21) can be played back.

14. Ambient system (40) comprising
a server (3) for providing an external entertainment media collection (22), and a food processor (1) according to any one of claims 9 to 13,
wherein the food processor (1) can be brought into communication with the server (3).

## Revendications

1. Procédé (100) pour faire fonctionner un robot ménager (1) adapté à la préparation d'aliments,
comprenant les étapes suivantes :
- Définir (104) une recette (11) pour préparer les aliments,
- Déterminer (106) une catégorie de thèmes (20) associée à la recette (11),
- Fournir (110) un support de divertissement (21) en fonction de la catégorie de thèmes (20),
le procédé (100) comprenant en outre l'étape consistant à :
- Déterminer (105) un type de recette (10) de la recette (11) par l'intermédiaire duquel la catégorie de thèmes (20) est associée à la recette (11),
le type de recette (10) étant indirectement lié à la catégorie de thème (20), la catégorie de thème (20) étant déterminée à partir du type de recette (10).

2. Procédé (100) selon la revendication 1,
**caractérisé en ce que**
des données de recette sont mises à disposition par le robot ménager (1).

3. Procédé (100) selon la revendication 1 ou 2,
**caractérisé en ce que**
la définition (104) de la recette (11) s'effectue par une sélection de la recette (11) dans une collection de recettes (12) par un utilisateur ou automatiquement.

4. Procédé (100) selon l'une quelconque des revendications précédentes,
**caractérisé en ce que**
le procédé (100) comprend en outre les étapes suivantes :
- Accès (107) à une base de données externe (3.1),
- Fournir (108) une collection de médias de divertissement externe (22) par la base de données externe (3.1),
en particulier dans lequel la fourniture (110) du support de divertissement (21) est effectuée par la collection de médias de divertissement externe (22).

5. Procédé (100) selon l'une quelconque des revendications précédentes,
**caractérisé en ce que**
le procédé comprend en outre l'étape suivante :
- Fournir (109) une collection de médias de divertissement interne (23) par le robot ménager (1),
en particulier dans lequel la fourniture (110) du support de divertissement (21) est effectuée par la collection de support de divertissement interne (23).

6. Procédé (100) selon l'une quelconque des revendications précédentes,
**caractérisé en ce que**
le procédé (100) comprend en outre l'étape suivante :
- un reproduction (111) du support de divertissement (21),
en particulier, la reproduction (111) du support de divertissement (21) étant effectuée par le robot ménager (1) et/ou par une commande (111.1) d'au moins un dispositif de reproduction externe (2).

7. Procédé (100) selon l'une quelconque des revendications précédentes,
**caractérisé en ce que**
le procédé (100) comprend en outre les étapes suivantes :
- Compiler (101) une collection de profils (31) à partir de différents supports de divertissement (21),
- la mémorisation (102) de la collection de profils (31),
en particulier, la collection de profils (31) étant constituée automatiquement à partir d'un historique (101.2) de l'utilisateur ou par une sélection (101.1) de l'utilisateur.

8. Procédé (100) selon l'une quelconque des revendications précédentes,
**caractérisé en ce que**
le procédé (100) comprend en outre l'étape suivante :
- L'envoi (103) de la collection de profils (31) via une interface de transmission (4).

9. Robot ménager (1) pour la préparation d'aliments, présentant
une interface utilisateur (5) permettant une entrée utilisateur pour définir (105) une recette (11), et
une unité de commande (6) qui est conçue pour déterminer (106) une catégorie de thèmes (20) associée à la recette (11), l'unité de commande (6) pouvant être mise en liaison de communication avec une unité de mémoire (7), de sorte qu'un support de divertissement (21) peut être mis à disposition en fonction de la catégorie de thèmes (20), l'unité de commande (6) étant conçue pour initier, en particulier pour exécuter, un procédé (100) selon l'une des revendications précédentes.

10. Robot ménager (1) selon la revendication 9,
**caractérisé en ce que**
l'interface utilisateur (5) comprend un affichage (5.1), en particulier un type de recette (10) et/ou la recette (11) pouvant être indiqués à l'utilisateur par l'affichage (5.1).

11. Robot ménager (1) selon la revendication 9 ou 10,
**caractérisé en ce que**
l'unité de commande (6) est conçue pour permettre à l'utilisateur, par l'intermédiaire de l'interface utilisateur (5), de créer une collection de profils (31), la collection de profils (31) pouvant être enregistrée dans l'unité de mémoire (7) ou dans une autre unité de mémoire.

12. Robot ménager (1) selon l'une quelconque des revendications 9 à 11,
**caractérisé en ce que**
l'unité de mémoire (7) comprend une base de données externe (3.1) et/ou une mémoire interne (8) du robot ménager (1) avec une base de données interne (8.1).

13. Robot ménager (1) selon l'une quelconque des revendications 9 à 12,
**caractérisé en ce que**
l'unité de commande (6) est conçue pour commander un dispositif de reproduction externe (2) de telle sorte que le support de divertissement (21) puisse être lu par le dispositif de reproduction externe (2), et/ou **en ce qu'**il est prévu un dispositif de reproduction interne (9) qui peut être commandé par l'unité de commande (6) de telle sorte que le support de divertissement (21) puisse être lu.

14. Système d'ambiance (40) comprenant
un serveur (3) pour fournir une collection de médias de divertissement externe (22) et un robot ménager (1) selon l'une quelconque des revendications 9 à 13,
dans lequel le robot ménager (1) peut être mis en liaison de communication avec le serveur (3).
